# EUROPÄISCHE PATENTSCHRIFT

(11) **EP 1 329 739 B1**
(45) Veröffentlichungstag und Bekanntmachung des Hinweises auf die Patenterteilung: **25.02.2009**
(21) Anmeldenummer: 03000170.5
(22) Anmeldetag: 07.01.2003
(51) Int. Cl.: G01S 7/487

(54) **Einrichtung zur Aufnahme eines Objektraumes**
Device for the recording of an object space
Dispositif de prise de vues d'un espace objet

(30) Priorität: 16.01.2002 AT 612002
(43) Veröffentlichungstag der Anmeldung: 23.07.2003
(73) Patentinhaber: Riegl Laser Measurement Systems GmbH, 3580 Horn (AT)
(72) Erfinder: Ullrich, Andreas, Dr., 3003 Gablitz (AT); Reichert, Rainer, 3850 Horn (AT); Ederer, Gerhard, 3841 Windigsteig (AT); Zierlinger, Wolfgang, 3495 Rohrendorf (AT)
(74) Vertreter: Révy von Belvárd, Peter

(56) Entgegenhaltungen:
- DE-A- 10 111 826
- US-A- 4 521 107
- AGGARWAL M ET AL: "Split aperture imaging for high dynamic range" IEEE, Bd. 2, 7. Juli 2001 (2001-07-07), Seiten 10-17, XP010554063
- CONGEDUTI F ET AL: "Multiple-mirror lidar '9-eyes'" J OPT A PURE APPL OPT; JOURNAL OF OPTICS A: PURE AND APPLIED OPTICS 1999 IOP, BRISTOL, ENGL, Bd. 1, Nr. 2, 1999, Seiten 185-191, XP002304648

## Beschreibung

Die Erfindung bezieht sich auf eine Einrichtung zur Aufnahme eines Objektraumes mit einer opto-elektronischen Entfernungsmeßeinrichtung nach einem Signal-Laufzeitverfahren mit den Oberbegriffsmerkmalen des Anspruches 1, wie sie beispielsweise aus der DE-A-101 11 826 bekannt geworden sind.

Typische Einrichtungen dieser Art umfassen eine Sendeeinrichtung zum Aussenden von optischen Signalen, insbesondere denen eines Lasers, und einen Empfangskanal zum Empfangen von optischen Signalen, insbesondere von Laserstrahlung, die von im Zielraum befindlichen Objekten reflektiert wird, sowie eine Auswerteeinrichtung, die aus der Laufzeit bzw. der Phasenlage des ausgesandten optischen Signals Entfemungswerte ermittelt.

Werden mit einer solchen Einrichtung Einzelmessungen durchgeführt und wird bei einer Messung der Dynamikbereich des Empfangskanales bzw. der Auswerteeinrichtung überschritten, so wird im allgemeinen die Messung wiederholt, wobei entweder die Sendeleistung reduziert wird oder entsprechende Dämpfungseinrichtungen in den Empfangskanal eingebracht werden. Diese Dämpfungseinrichtungen können beispielsweise aus Graufiltem oder Aperturblenden bestehen, die in den Strahlengang der Empfangseinrichtung eingebracht werden. Solche Einrichtungen können auch zur Reduktion der Sendeleistung herangezogen werden. Die Wiederholung der Messung kann automatisch oder auch manuell durch den Benutzer ausgelöst werden.

M. Aggarwal und N. Ahuja beschreiben in IEEE, Bd. 2, 7. Juli 2001, Seiten 10-17 eine Kamera mit drei Bildsensoren, welche über eine Spiegelanordnung (z.B. eine Spiegelpyramide) deckungsgleiche Bilder empfangen und an das nachgeschaltete System die entsprechenden Bildsignale mit unterschiedlichem Pegel weiterleiten. Zufolge der begrenzten Dynamik der einzelnen Bildsensoren sind in einigen Bildern Bildelemente überstrahlt, andere zweigen dunkle Zonen, die keiner Zeichnung mehr erkennen lassen. Durch Mittelwertbildung kann dann ein Bild mit komprimierter Dynamik erzeugt werden, das im wesentlichen überall eine brauchbare Durchzeichnung aufweist. Allerdings ergibt eine permanente Kombination der Signale für die oben erwähnten Zwecke eine verzerrte Impulsform, die zu großen Fehlern bei der Entfernungsmessung führen würde.

Bei kontinuierlichen oder quasikontinuierlichen Messungen ist eine solche Wiederholung einer Messung nur bedingt möglich. Kontinuierliche bzw. quasikontinuierliche Messungen sind für Systeme typisch, bei welchen eine Entfernungsmeßeinrichtung der oben beschriebenen Art mit einer Scan-Einrichtung kombiniert ist, durch welche die optischen Achsen von Sende- und Empfangseinrichtung in zwei, vorzugsweise orthogonale, Richtungen abgelenkt werden. Solche Einrichtungen werden eingesetzt, um von einem Objektraum, z.B. von einer Geländeformation, von einem Gebäude oder einer Maschine bzw. Anlage ein Entfernungsbild aufzuzeichnen. Aus mehreren, von verschiedenen Standorten aufgenommenen Entfernungsbildern eines Objektes bzw. aus den entsprechenden Data-Files kann mittels einer elektronischen Rechenanlage ein 3-D-Modell des Objektes berechnet werden, das dann mit entsprechenden CAD- oder ähnlichen Programmen weiterbearbeitet werden kann.

Kontinuierliche bzw. quasikontinuierliche Messungen werden aber auch in der Meß- und Steuerungstechnik eingesetzt z.B. zur Überwachung der Position von Krananlagen und anderer Fördereinrichtungen. Bei solchen kontinuierlichen oder quasikontinuierlichen Messungen kommt es zu Problemen, wenn nach einer Messung mit geringem Eingangspegel, der Entfernungsmesser ein stark reflektierendes Ziel, z.B. einen Retro-Reflektor, erfaßt, wie sie bei den oben beschriebenen Aufnahmen als Referenzmarken eingesetzt werden. Die sich hierbei ergebenden Pegelsprünge können weit über 30dB betragen und damit den Empfangskanal gegebenenfalls übersteuern. Durch den Betrieb in einem nichtlinearen Kennfeldbereich wird, wie weiter unten näher erläutert werden wird, der Empfangsimpuls stark verzerrt und der gemessene Entfemungswert entsprechend verfälscht.

Dieses Problem wird erfindungsgemäß durch die kennzeichnenden Merkmale des Anspruches 1 gelöst, wobei die Verwendung eines elektronischen Umschalters wesentliche ist, der jeweils nur mit jenem Sensor verbindet, dessen Signal eine optimale Ansteuerung des Empfangskanals gewährleistet, so dass der Empfangskanal stets in seinem optimalen Dynamikbereich arbeitet. Da die Umschaltung in Abhängigkeit vom Empfangspegel der Echosignale erfolgt, wird hier nicht eine Dynamikkompression, sondern vielmehr eine Dynamikerweiterung des Systems vorgenommen.

Vorzugsweise umfaßt bei einer solchen Einrichtung die Auswerteeinrichtung eine mehrkanalige Zeitmesseinrichtung, die die Zeitmessung mehrzielfähig macht, d.h. dass der Entfernungsmesser in die Lage versetzt wird, bei einer einzigen Messung mehrere, in einem definierten Raumwinkel gestaffelt angeordnete Objekte zu differenzieren und damit als räumlich getrennte Ziele zu erkennen. Bevorzugt ist es ferner, wenn die Merkmale des Anspruches 3 verwirklicht sind.

Im Rahmen der Erfindung ist es aber auch möglich, drei identische Empfänger, z.B. drei Pin-Dioden, mit gleichem Verstärker, einzusetzen, die mit den vorgeschalteten Strahlen teilungsystemen Empfangskanäle ergeben.

Weitere Merkmale der Erfindung ergeben sich aus der nachfolgenden Beschreibung eines Ausführungsbeispieles und unter Bezugnahme auf die Zeichnung.
- Fig. 1a: zeigt das Diagramm eines Laserimpulses, das Diagramm gemäß
- Fig. 1b: veranschaulicht verschiedene Empfangsimpulse; in
- Fig. 2: ist der Meßkopf eines Laser-Scanners schematisch dargestellt und in
- Fig. 3: ist ein Blockschaltbild eines Entfernungsmessers gemäß der Erfindung gezeigt.

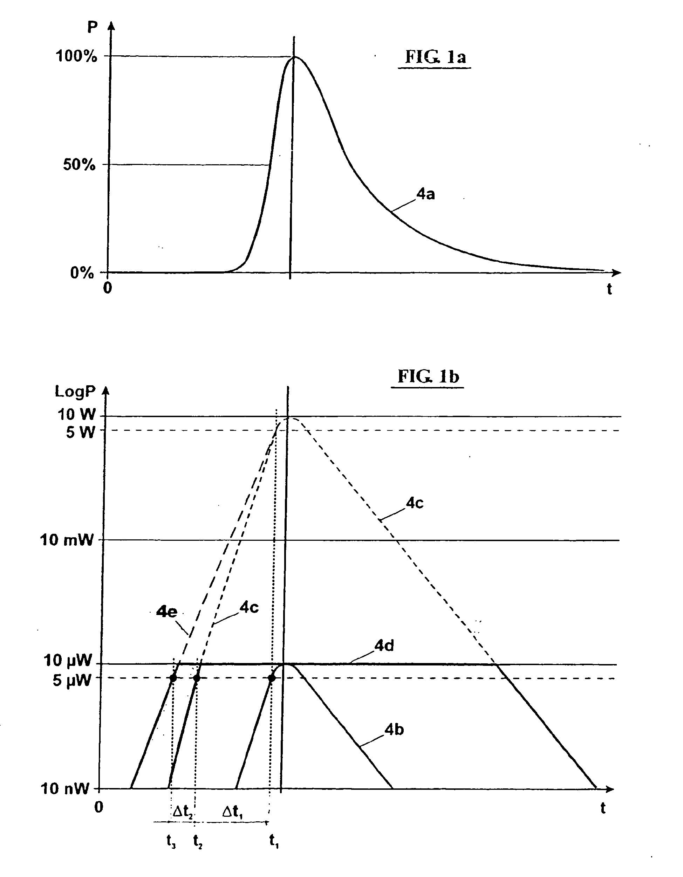

In Fig. 1a ist das Impulsdiagramm eines Lasermeßsignals dargestellt. Der Laser schwingt zunächst an, erreicht bei ca. 50 % der Maximalamplitude einen Wendepunkt und klingt nach Überschreiten des Maximums vergleichsweise langsam ab (Kurve 4a). Während der Anschwingvorgang bei Dioden-Lasern gut reproduzierbar ist, unterliegt das Anschwingen bei dioden-gepumpten, passiv-gütegeschalteten Lasern starken statistischen Schwankungen. Für die Zeitmessung des Impulses wird daher ein Bereich der ansteigenden Impulsflanke gewählt, in welchem der Anschwingvorgang des Lasers mit Sicherheit abgeschlossen ist. Im allgemeinen wird hierzu jener Punkt herangezogen, bei welchem 50 % der Maximal-Amplitude erreicht wird.

Der Sendeimpuls des Lasers wird an einem Ziel im Objektraum reflektiert und von der Empfangseinrichtung des Entfernungsmessers aufgenommen. Entsprechend der Geometrie des Zieles kann die Form des Empfangsimpulses gegenüber der des Sendeimpulses verändert sein. In jedem Fall ist aber mit sehr großen Amplitudenschwankungen zu rechnen, je nachdem ob das Ziel weit entfernt ist oder sich in unmittelbarer Nähe des Entfernungsmessers befindet. Unterschiede ergeben sich ferner durch das Reflexionsvermögen des Zieles. Im allgemeinen wird die Laserstrahlung durch die Ziele mehr oder weniger stark diffus reflektiert, im Objektraum ist jedoch auch mit Reflektoren, z.B. RetroReflektoren zu rechnen, die die Laserstrahlung in sich reflektieren und nur sehr wenig dämpfen. Da moderne Laser-Entfernungsmesser einen Meßbereich bis über 1 km aufweisen, können sich bei aufeinanderfolgenden Messungen Amplitudenunterschiede von bis zu 90 dB ergeben.

Fig. 1b zeigt verschiedene Empfangsimpulse, wobei zur besseren Verdeutlichung für die Amplitude ein logarithmischer Maßstab gewählt wurde. Von einem weit entfernten Ziel mit durchschnittlichem Reflexionsvermögen wird ein Impuls 4b empfangen, der eine maximale Amplitude von 10 µW aufweist. Der Dynamikbereich der Empfangseinrichtung beträgt 30 dB (10 nW bis 10 µW), die Empfangseinrichtung ist somit maximal ausgesteuert. Für die Zeitmessung wird, wie oben erwähnt der 50 % Punkt herangezogen (t₁). Trifft nun ein Echo-Impuls 4c von einem nahen, hoch reflektierenden Ziel die Empfangseinrichtung so ist die Amplitude um Größenordnungen höher, in dem vorliegenden Beispiel um den Faktor 10⁶. Der Dynamikbereich der Empfangseinrichtung wird überschritten, die Empfangseinrichtung gelangt in einen Sättigungsbereich, so daß der Impuls mit 10 µW begrenzt wird (4d). Wird gemäß dem oben erwähnten Algorithmus der 50 % Punkt zur Zeitmessung herangezogen, so erhält man anstelle der Zeit t₁ eine Zeit t₂, die um Δt₁ kleiner ist als t₁. Diese Differenz in der Zeitmessung hat einen entsprechenden Fehler in der Entfernungsmessung zur Folge, d.h. es werden zu kleine Entfernungswerte gemessen. Sofern auch der begrenzte Puls zeitlich stabil ist, ist es prinzipiell möglich, diesen Meßfehler über eine Messung der Empfangssignalstärke zu kompensieren. Vor allem bei dioden-gepumpten, passiv-gütegeschalteten Lasern ist aber, wie bereits oben erwähnt der Anschwingvorgang nicht exakt definiert. In der Fig. 1b ist ein weiterer Impuls 4e gezeigt, der sich von dem Impuls 4c nur in seinem Anschwingverhalten unterscheidet. Solange die Empfangseinrichtung in einem linearen Kennfeldbereich arbeitet, führt dies zu keinen Problemen, wird aber durch Überschreiten des maximalen Dynamikbereiches die Impulsamplitude begrenzt (4d) so ergibt sich ein weiterer Meßfehler Δt₂. Da der Anschwingvorgang des Lasers statistischen Schwankungen unterliegt, ist es nicht möglich, diesen Fehler zu kompensieren.

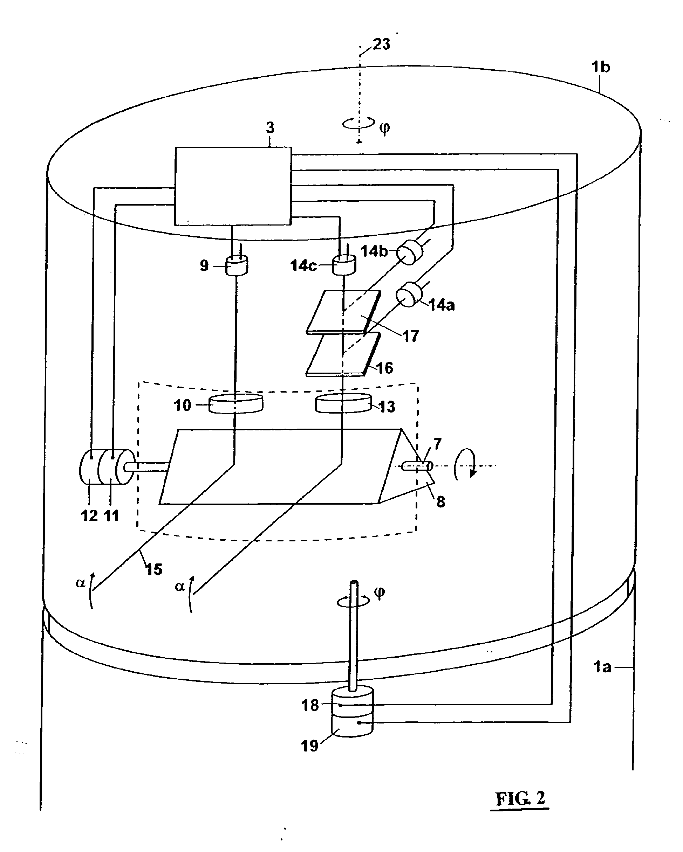

Um diesen Meßfehler zu vermeiden, wird erfindungsgemäß mindestens ein weiterer kolinearer Empfänger mit reduzierter Empfindlichkeit vorgesehen. In der Fig. 2 ist schematisch ein entsprechend ausgerüsteter Meßkopf 1 eines Laser-Scanners dargestellt. Am Meßkopfunterteil 1a, der auf einem nicht dargestellten Stativ befestigt ist, ist der Meßkopfoberteil 1 b um eine vertikale Achse 23 schwenkbar gelagert. Angetrieben wird der Meßkopfoberteil 1b hierbei durch einen Motor 18. Ein auf derselben Achse angeordneter Winkeldecoder 19 meldet die jeweilige Winkelstellung des Meßkopfes 1b an eine Auswerteeinrichtung 3 zurück. Der Meßkopfoberteil 1b umfaßt den Laser-Entfernungsmesser und ein Spiegelprisma 8, das um eine horizontale Achse 7 drehbar ist. Angetrieben wird das Spiegelprisma von einem Motor 11, auf dessen Welle ein Winkeldecoder 12 angeordnet ist. Gesteuert wird der Antrieb des Spiegelprismas 8 von der Auswerteeinrichtung 3, die auch die Signale des Winkeldecoders 12 verarbeitet.

Die Auswerteeinrichtung 3 umfaßt auch die Elektronik des Entfernungsmessers und steuert einen Laser 9 an. Dieser besteht aus einem dioden-gepumpten güte-geschalteten Festkörperlaser. Mit 10 ist eine Optik bezeichnet, die im allgemeinen so justiert ist, daß sie die Laser-Quelle ins Unendliche abbildet. Durch das rotierende Spiegelprisma 8 wird der Meß-Strahl 15 in Richtung des Pfeiles α abgelenkt. Parallel zum Sendekanal 9,10 ist ein Empfangskanal vorgesehen, dessen optische Achse durch das Spiegelprisma 8 parallel zum Meß-Strahl 15 abgelenkt wird. Durch die Optik 13 wird die einfallende Strahlung auf die Photoempfänger 14a bis 14c fokussiert. Im Strahlengang der Optik 13 ist ein erster, teildurchlässiger Spiegel 16 angeordnet, der einen Großteil der einfallenden Strahlung auf eine hochempfindliche Avalanche-Diode 14a lenkt. Ein kleiner Teil der Strahlung gelangt zu dem zweiten teildurchlässigen Spiegel 17, der ebenfalls wieder den größeren Teil der Strahlung ablenkt und zwar auf die PIN-Diode 14b. Die restliche Strahlung trifft schließlich auf die Photodiode 14c.

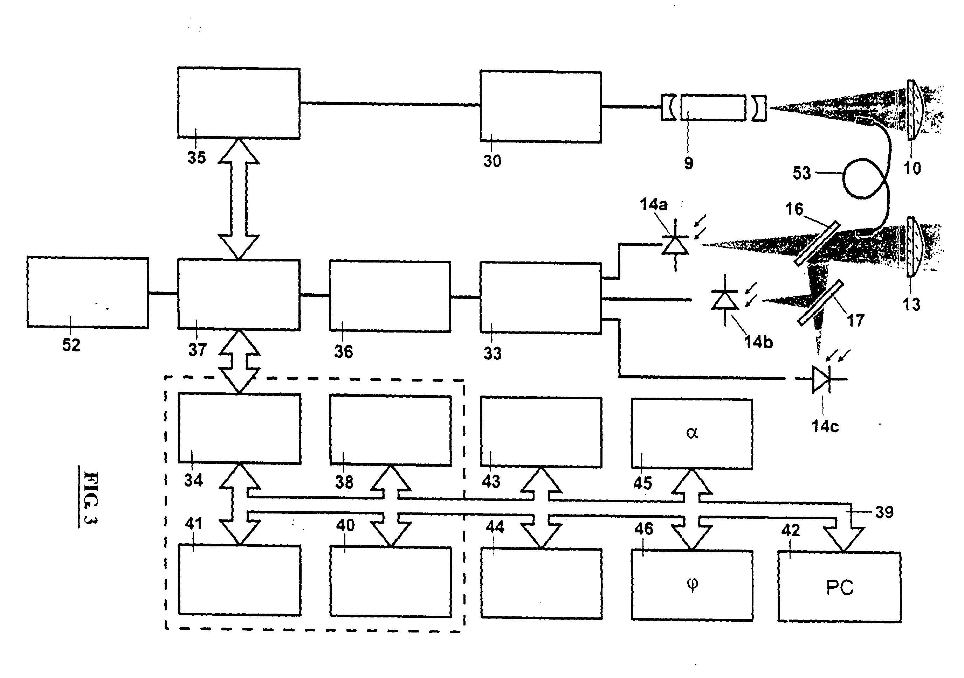

Fig. 3 zeigt in Form eines Blockdiagramms schematisch den Aufbau des Steuergerätes 3 des Laser- Scanners gemäß der Erfindung, wobei in diesem Diagramm nur die den Ablenkeinheiten nachgeschalteten Systeme dargestellt sind. Der Laser-Transmitter 35 dieser Anlage arbeitet mit dem passiv-gütegeschaltetem Festkörperlaser 9, der durch Dioden 30 gepumpt wird. Im Gegensatz zu bekannten Laserentfernungsmessern, die mit Laserdioden arbeiten, kann der Festkörper-Laser 9 nicht durch den Prozessor 34 direkt synchronisiert werden, sondern ist im wesentlichen freilaufend. Es ist daher notwendig, den Empfängern 14a bis 14c neben den Echo-Impulsen auch die Sendeimpulse zuzuführen. Dies kann vorteilhaft mittels eines im Strahlengang des Festkörperlasers 9 eingebrachten Lichtleiters 53 erfolgen. Das aus dem Sende-Strahlengang abgezweigte LaserLicht wird über den Lichtleiter 53 direkt den Empfängern 14a bis 14c zugeleitet. Alternative Lösungsansätze basieren auf eigenen separaten Empfängern zur Erzeugung eines elektrischen Pulses für die Laufzeitmessung.

Vorzugsweise sind der Festkörper-Laser und die Empfangsdioden in ihrer spektralen Charakteristik aufeinander abgestimmt, wobei die Empfangsdioden ihre maximale spektrale Empfindlichkeit in dem Bereich aufweisen, in welchem der Laser maximal emittiert. Da die Empfangsdioden aber neben der vom Laser emittierten und vom Ziel reflektierten Strahlung viel Störstrahlung in Form von Tageslicht oder Licht von den verschiedensten Kunstlichtquellen empfangen, kann es vorteilhaft sein, den Empfangsdioden ein möglichst schmalbandiges, optisches Filter vorzusetzen, welches seine maximale Transmission in demjenigen Spektralband aufweist, in welchem der Laser 9 emittiert.

Den 3 Empfangsdioden 14a bis 14c ist ein Schaltstufe 33 nachgeschaltet, welche das Signal derjenigen Empfangsdiode zu dem nachfolgenden Empfangskanal durchschaltet, welches Signal diesen Empfangskanal in einem optimalen Dynamikbereich ansteuert.

In dem mehrzielfähigen Empfangskanal, der von einem Clock-Generator 52 gesteuert wird und aus einer Verstärker- und Analogsignalprozessorstufe 36 und einem Analog/Digitalwandler 37 besteht, werden der Sendeimpuls und der Echo-Impuls bzw. die Echo-Impulse digitalisiert und weiter verarbeitet. Dieser Empfangskanal hat einen linearen Dynamikbereich von 30dB. Die Empfangsdioden 14a bis 14c und die Teilungsspiegel 16 und 17 sind in ihrer Empfindlichkeit bzw. in ihrem Teilungsverhältnis so aufeinander abgestimmt, daß die Gesamtempfindlichkeiten der einzelnen Empfangsdioden um jeweils 30 dB gestaffelt sind, so daß ohne Übersteuerung des Empfangskanales Eingangssignale mit einem Dynamikbereich von 90 dB verarbeitet werden können. Durch die Erfindung wird daher auch bei diesen extremen Dynamikbereichen der oben beschriebene Meßfehler vermieden und somit eine maximale Genauigkeit des Systems erzielt.

Unter Berücksichtigung der konstanten Laufzeit des Referenz-Sendeimpulses im Lichtleiter 53 wird aus der Zeitdifferenz zwischen dem Eintreffen des Sendeimpulses und des Echo-Impulses die Entfernung des jeweiligen Objektes ermittelt.

Getaktet wird die gesamte Einrichtung durch einen Clock-Generator 52. Der Prozessor 34 und der Datenspeicher 38 sind durch einen Datenbus miteinander verbunden, der schematisch angedeutet und mit 39 bezeichnet ist. An diesen Datenbus 39 sind ferner ein Programmspeicher 40 für den Prozessor 34 angeschlossen, sowie ein Datenzwischenspeicher 41, in welchen nach einer ersten Auswertung durch den Prozessor 34 Rohdaten abgelegt werden, die am Ende des Meßzyklus ausgelesen werden. Aus diesen Rohdaten wird mit im Programmspeicher abgelegten Algorithmen ein Entfernungswert für jedes einzelne Rasterelement ermittelt. Die Steuerung des Antriebes des Spiegelprismas 8 erfolgt durch die Einheit 45, die des Meßkopfantriebes durch die Einheit 46.

Die Datafiles der verschiedenen Scan-Aufnahmen, die jeweils pro Rasterelement einen Datensatz bestehend aus den beiden Winkelkoordinaten α und ϕ, einen Entfernungswert und gegebenenfalls noch weitere Daten wie Signal-Amplitude, Signalbreite und -form etc. aufweisen, werden in einem Speicher 43 abgelegt.

Die weitere Verarbeitung mehrerer Scan-Aufnahmen zur Erzeugung eines 3-D-Modells des Zielraumes erfolgt in einem Rechner 42. Diese Verarbeitung erfolgt in der Regel offline. Hierbei werden die bei den einzelnen Scan-Aufnahmen gewonnen Data-Files ("Punkt-Wolken") in dem Rechner 42 miteinander verschmolzen, wobei Referenzmarken zur Deckung gebracht werden. Das Ergebnis ist ein 3-D-Modell, das als ein Data-File zur Verfügung steht und beispielsweise mit Konstruktions-, Geodäsie-, Architektur- oder ähnlichen Computerprogrammen weiter bearbeitet werden kann.

## Patentansprüche

1. Einrichtung zur Aufnahme eines Objektraumes mit einer opto-elektronischen Entfernungsmesseinrichtung nach einem Signal-Laufzeitverfahren mit einer Sendeeinnchtung (9) zum vorzugsweise kontinuierlichen bzw. quasikontinuierlichen Aussenden von optischen Signalen, insbesondere denen eines Lasers (9), und einem ersten Empfangskanal, beinhaltend einen Photoempfänger (14a), zum Empfangen von optischen Signalen, insbesondere von Laserstrahlung, die von im Zielraum befindlichen Objekten reflektiert wird, gegebenenfalls mit einer Scan-Einrichtung (8, 11, 18) zur Ablenkung der optischen Achsen von Sende- und Empfangseinrichtung (9, 14) in zwei, vorzugsweise orthogonale Richtungen, ferner mit einer Auswerteeinrichtung (34, 42),
die aus der Laufzeit bzw. der Phasenlage des ausgesandten optischen Signals und der Echosignale Entfernungswerte ermittelt,
**dadurch gekennzeichnet, dass**
mindestens ein weiterer Empfangskanal, beinhaltend einen weiteren Photoempfänger (14b bzw. 14c), vorgesehen ist, wobei sämtlichen Empfangskanälen eine gemeinsame, auf sie fokussierende Optik (13) zugeordnet ist und sie unterschiedliche Empfindlichkeiten aufweisen, ferner mit einem elektronischen Umschalter (33), welcher bei der Messung den Empfangs- kanal (36,37) in Abhängigkeit vom Pegel des Echosignals alternativ auf jenen Photoempfänger (14a oder 14b bzw. 14c) schaltet, dessen Signal den Empfangskanal (36,37) in einem optimalen Dynamikbereich aussteuert.

2. Einrichtung zur Aufnahme eines Objektraumes nach Anspruch 1,
**dadurch gekennzeichnet, dass**
die Auswerteeinrichtung (34, 42) eine mehrzielfähige Zeitmesseinrichtung umfasst.

3. Einrichtung nach Anspruch 1 oder 2,
**dadurch gekennzeichnet, dass**
den einzelnen Photoempfängern (14a bis 14c) Teilungsprismen bzw. Teilungsspiegel (16,17) vorgeschaltet sind, deren Teilungsverhältnisse der Empfindlichkeit der jeweiligen Photoempfänger (14a bis 14c), sowie deren Dynamikbereich und dem des nachgeschalteten Empfangskanal (36,37) entsprechen, wobei sich beispielsweise bei gleicher Empfindlichkeit der Photoempfänger und einem maximalen Dynamikbereich von 30 dB ein Teilungsverhältnis des Spiegels oder Prismas von 1000:1 ergibt.

4. Einrichtung nach einem der Ansprüche 1 bis 3,
**dadurch gekennzeichnet, dass**
die Einrichtung drei Photoempfänger (14a-14c) umfasst, deren erster eine Avalanche-Diode oder einen Photo-Multiplier beinhaltet (14a) und einen Arbeitsbereich von ca. 10 nW bis 10 µW aufweist, deren zweiter eine PIN-Diode (14b) beinhaltet und mit der vorgeschalteten Aufteilungsoptik einen Arbeitsbereich von ca. 10 µW bis 10 mW besitzt und deren dritter eine Photo-Diode (14c) beinhaltet und mit der vorgeschalteten Aufteilungsoptik einen Arbeitsbereich von ca. 10 mW bis 10 W aufweist.

## Claims

1. Device for recording an object space comprising opto-electronic range finder means according to the signal-time-of flight method, which includes transmitter means (9) for transmitting optical signals, in particular those of a laser (9), preferably in a continuous or quasi-continuous manner, and a first receiver channel, that comprises a photo-receiver (14a), for receiving optical signals, particularly laser radiation, which is reflected from objects situated in the target space, and optionally including scanning means (8, 11, 18) for deviating the optical axes of the transmitter and receiver means (9, 14) into two, preferably orthogonal, directions, furthermore comprising evaluation means (34, 42), which determine distance values from the time-of-flight or from the phase relationship of the transmitted optical signal, **characterised in that** at least a second receiver channel is provided, that comprises another photo-receiver (14b or 14c), optical means (13) being associated in common to all receiver channels which focuses onto them, wherein they have different sensitivities, furthermore comprising electronic switch-over means (33), which, in dependence of the level of the echo signal, switches the receiver channel alternatively to that photo-receiver (14a or 14b or 14c) when measuring, the signal of which balances the receiver channel (36, 37) out in an optimum dynamic range.

2. Device for recording an object space according to claim 1, **characterised in that** the evaluation means (34, 42) comprise multi-target time measuring means.

3. Device according to claim 1 or 2, **characterised in that** in series with the individual photo-receivers (14a to 14c), divider prisms or divider mirrors (16, 17) are arranged, the divider relationship of which corresponding to the sensitivity of the respective photo-receiver (14a to 14c) as well as of the dynamic range thereof and of the postponed receiver channel (36, 37), so that, for example, with the same sensitivity of the photo-receivers and a maximum dynamic range of 30 dB, a divider relationship of the mirror or prism will result of 1000:1.

4. Device according to any of claims 1 to 3, **characterised in that** the device comprises three photo-receiver (14a-14c), the first of which including an avalanche diode or a photo-multiplier (14a) having a working range of about 10 nW to 10 µW, the second of which including a PIN-diode (14b) which, with the divider optics in series has a working range of 10µW to 10 mW, and the third of which including a photo-diode (14c) and with the divider optics in series has a working range of 10 mW to 10 W.

## Revendications

1. Dispositif d'enregistrement d'un espace objet comprenant un dispositif optoélectronique de mesure de distances selon la méthode à temps de parcours, qui comprent un dispositif émetteur (9) pour émettre des signaux optiques, de préférence d'une manière continuelle ou quasi continuelle, en particulier ceux d'un laser (9), et un premier canal de réception, incluant un photorécepteur (14a), pour recevoir des signaux optiques, particulièrement d'un rayonnement laser, qui sont réfléchis par des objets situés dans l'espace de but, le cas échéant avec un dispositif à scanner (8, 11, 18) pour dévier les axes optiques des dispositifs émetteur et récepteur (9, 14) dans deux directions, de préférence orthogonales, et comprenant de plus un dispositif d'évaluation (34, 42), qui détermine des valeurs de distance à partir du temps de parcours ou de la relation des phases des signaux optiques émis et des signaux écho réfléchis, **caractérisé en ce, qu'**au moins un deuxième canal de réception, incluant un autre photorécepteur (14b ou 14c), est prévu, des moyens optiques (13) étant associés en commun à tous les canaux de réception, qui focalise à eux, lesdits canaux de réception ayant des sensibilités différentes, comprenant de plus un commutateur électronique (33), qui, lors du mesurage, met en circuit le canal de réception alternativement et en fonction du niveau du signal écho réfléchi é ce photorécepteur (14a ou 14b ou 14c), dont le signal règle le canal de réception (36, 37) dans un régime de volume optimal.

2. Dispositif d'enregistrement d'un espace objet selon la revendication 1, **caractérisé en ce, que** le dispositif d'évaluation (34, 42) comprend un dispositif chronométrique multibut.

3. Dispositif selon la revendication 1 ou 2, **caractérisé en ce, que** des prismes de division ou des miroir de division sont intercalés en avant des photorécepteurs individuels (14a à 14c), les relations de division de ceux-ci correspondant chacune à la sensibilité du photorécepteur respectif (14a à 14c), ainsi qu'au régime de volume de ceci et celui-ci du canal de réception (36, 37) intercalé en arrière, une relation de division du miroir ou du prisme de 1000:1 résultant, par exemple, avec une sensibilité égale des photorécepteurs et avec un régime de volume maximal de 30 dB.

4. Dispositif selon une revendication quelconque 1 à 3, **caractérisé en ce, que** le dispositif comprend trois photorécepteur (14a-14c), dont le premier inclue une diode à avalanche ou un photomultiplicateur (14a) et a un régime de travaille d'environ 10 nW à 10 µW, dont le deuxième inclue une diode PIN (14b) et, avec les moyens de divisions intercalés en avant, a un régime de travaille d'environ 10 µW à 10mW, et dont le troisième inclue une photodiode (14c) et, avec les moyens de divisions intercalés en avant, a un régime de travaille d'environ 10mW à 10W.
